# EUROPEAN PATENT APPLICATION

(11) **EP 3 242 172 A1**
(43) Date of publication of application: **08.11.2017**
(21) Application number: 15875682.5
(22) Date of filing: 29.12.2015
(51) Int. Cl.: G05B 19/02, H02J 1/00

(54) **METHOD FOR OPERATING DUAL CONTROLLER**

(30) Priority: 29.12.2014 KR 20140192752
(71) Applicant: Hyosung Corporation, Seoul 04144 (KR)
(72) Inventor: KANG, Hyo Jin, Seoul 07694 (KR); NO, Jae Keun, Seoul 07993 (KR)
(74) Representative: Viering, Jentschura & Partner mbB Patent- und Rechtsanwälte
(86) International application number: PCT/KR2015/014424
(87) International publication number: WO 2016/108588

(57) **Abstract**

The present invention provides a method for operating dual controller which monitors the state of a dual controller to determine whether the dual controller is faulty and enables operation thereof with a controller in a normal state. An operation method of a dual controller according to the present invention dq-converts control command output values of first and second controllers to calculate rates of change in dq conversion values and dq-converts feedback input values, fed back to the first and second controllers, to calculate average rates of change in dq conversion values. When the average rates of change in the dq conversion values for the control command output values and the average rates of change in the dq conversion values for the feedback input values for the respective first and second controllers are identical, the corresponding controller is determined to be in a normal state, and to be in a faulty state otherwise. According to the results of the determination, the controller in the faulty state is set to a standby state and the controller in the normal state is set to an active state.

## Description

### Technical Field

The present invention generally relates to a method for operating dual controller, and more particularly, to a method for operating dual controller which monitors the states of two controllers in a dual configuration to determine whether the dual controllers are faulty and enables the operation thereof with a normal controller.

### Background Art

Nowadays, power grid-connected systems are being continuously developed. Such a grid-connected system includes not only an inverter but also a high-voltage direct current (HVDC) system, a static synchronous compensator (STATCOM) system, a power conditioning system (PCS), or the like.

Typically, an HVDC system or a STATCOM system using a modular multilevel converter (MMC) uses a dual controller in order to improve the stability of system operation. The dual controller is advantageous in that even when one controller is faulty or in a maintenance mode, the other controller may operate a system and accordingly, the system may stably operate without a break.

However, in a typical dual controller system, when a main controller operates, a sub-controller is required in order to constantly monitor whether a fault occurs in the main controller. To this end, a module for monitoring a state is typically required to be installed between a main controller and a sub-controller. For example, Korean Patent Laid-open Publication No. 10-2012-0020867 discloses a shared memory for sharing control signal data, separately installed between a main controller and a sub-controller.

In order to address this requirement, recently, for example, Korean Patent No. 10-0964070 discloses a technique for determining whether a fault occurs in a main controller using a control signal of the main controller. In Korean Patent No. 10-0964070, after the main controller transmits communication data to a plurality of drivers, a sub-controller counts the elapsed time when the main controller re-transmits communication data to the plurality of drivers and determines that a fault occurs in the main controller when the counted elapsed time is equal to or longer than a preset time.

However, since determination of the occurrence of a fault takes some time, it is difficult to apply this prior art to a system which requires high-speed data processing, such as an HVDC or STATCOM system. In addition, in the above-described prior art, a main controller operates in an active state and a sub-controller remains in the standby state and then operates when a fault occurs in the main controller. In other words, the determination of the occurrence of a fault is performed only on the main controller, after which switchover to the sub-controller is performed. However, since no determination of whether a fault also occurs in the sub-controller is performed, when a fault occurs in the sub-controller, reliability of operation of the HVDC system may be seriously degraded.

### Disclosure

### Technical Problem

Accordingly, the present invention has been made keeping in mind the above problems occurring in the prior art, and an object of the present invention is to provide an operation method of a dual controller for simultaneously determining whether two dual controllers are in an abnormal state, setting a faulty controller to a standby state, and enabling operation using a controller in a normal state.

### Technical Solution

In order to accomplish the above object, the present invention provides an operation method of a dual controller, the operation method including: dq-converting control command output values of first and second controllers; calculating rates of change in dq conversion values for the control command output values of the first and second controllers; dq-converting feedback input values fed back to the first and second controllers; calculating average rates of change in dq conversion values for the feedback input values of the first and second controllers; determining the first controller to be in a normal state when average rates of change in the dq conversion values for the control command output values of the first controller and the average rates of change in the dq conversion values for the feedback input values of the first controller are identical, and to be in a faulty state otherwise; determining the second controller to be in a normal state when average rates of change in the dq conversion values for the control command output values of the second controller and the average rates of change in the dq conversion values for the feedback input values of the second controller are identical, and to be in a faulty state otherwise; and setting a controller in the faulty state to a standby state and a controller in the normal state to an active state according to the determined results.

In the present invention, the control command output values may include V_{DC}, V_{AC}, i_{AC}, P, and Q.

In the present invention, the feedback input values may include current iac and voltage Vac measured in a system side of the lower-layer module.

### Advantageous Effects

According to the present invention, the dual controllers are simultaneously checked for abnormalities, a faulty controller is set to a standby state, and operation is performed with a controller in a normal state. Accordingly, the reliability of system operation may be improved.

In addition, according to the present invention, since each controller compares a reference value input from an upper layer with an input value fed back from a lower layer to determine whether the two controllers are abnormal, more accurate state diagnosis is enabled.

### Description of Drawings

FIG. 1 is a configuration diagram of a dual controller system according to an embodiment of the present invention;
FIG. 2 is a conceptual diagram illustrating an output of a dual controller according to an embodiment of the present invention; and
FIG. 3 is a flowchart illustrating an operation method of a dual controller according to the present invention.

### Best Mode

Hereinafter, embodiments of the present invention will be described in detail with reference to the accompanying drawings. Initially, it should be noted that like reference numerals refer to like constituent elements although they are illustrated in different drawings. Further, when it is determined that the detailed description of the related functions and constructions would obscure the gist of the present invention, such description will be omitted.

In addition, in describing elements of embodiments of the present invention, terms such as "first", "second", "A", "B", "(a)", and "(b)" may be used. Such terms are used only for distinguishing an element from another element, but do not limit the substance of the element or the sequence or order thereof. It should be noted that if it is described in the specification that one component is "connected," "coupled" or "joined" to another component, a third component may be "connected," "coupled," and "joined" between the first and second components, although the first component may be directly connected, coupled or joined to the second component.

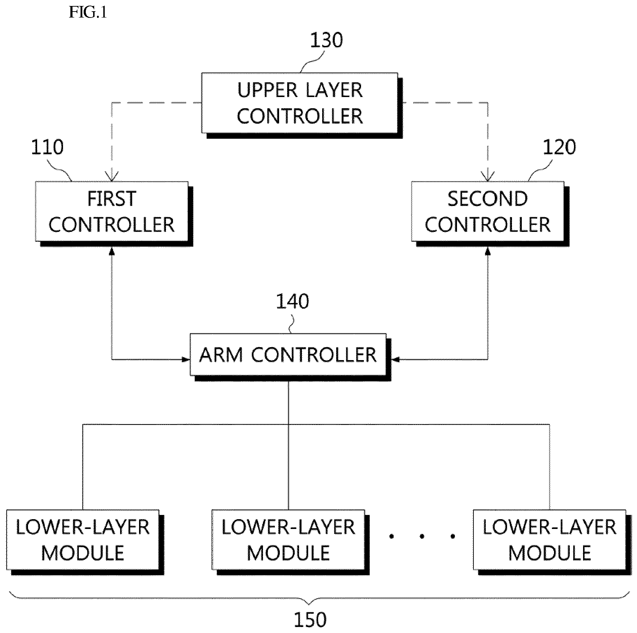

FIG. 1 is a configuration diagram of a dual controller system according to an embodiment of the present invention.

Referring to FIG. 1, a dual controller system according to the present invention includes a first controller 110, a second controller 120, an upper layer controller 130, an ARM controller 140, and a plurality of lower-layer modules 150.

The first and second controllers 110 and 120 are configured to be dualized. Such first and second controllers 110 and 120 are enabled to control a plurality of lower-layer modules 150 according to a control target value received from the upper layer controller 130. The upper layer controller 130 allocates a control target value for each lower-layer module 150 to deliver the control target values to the first and second controllers 110 and 120, and the first and second controllers 110 and 120 control the operation of each lower-layer module 150 in order to reach the control target value.

In addition, the first and second controllers 110 and 120 respectively monitor their own states, and according to the monitored results, a controller in a faulty state is set to be switched over to a standby state and a controller in a normal state is set to an active state in order to participate in system operation.

The ARM controller 140 receives respective control commands from the first and second controllers 110 and 120 to deliver the control commands to the plurality of lower-layer modules 150, and conversely, receives feedback information transmitted from the plurality of lower-layer modules 150 and delivers the feedback information to the first and second controllers 110 and 120. With the feedback information delivered in this way, the state of operation and information about the state of the lower-layer modules 150 may be known.

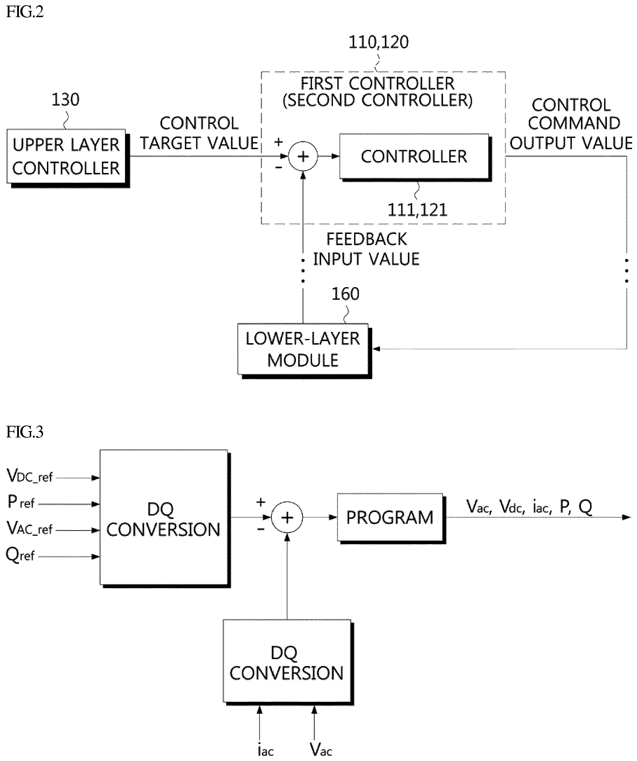

FIG. 2 is a conceptual diagram illustrating the output of a dual controller according to an embodiment of the present invention.

Referring to FIG. 2, in a dual controller according to the present invention, the first and second controllers 110 and 120 simultaneously receive the control target value from the upper layer controller 130. The first and second controllers 110 and 120 then output control commands for controlling the lower-layer modules 150 according to the received control target value. At this point, the controllers 110 and 120 receive control command output values and feedback input values, which are fed back and input from the lower-layer modules 150, and internal controllers 111 and 121 correct the control commands suitably for the states of the lower-layer modules 150 using the control command output values and the feedback input values so as to output newly updated control commands.

FIG. 3 illustrates a procedure for deriving, by the first and second controllers, the control command output values according to an embodiment of the present invention.

Referring to FIG. 3, each of the first and second controllers 110 and 120 according to the present invention receives a plurality of first input variables desired to be controlled from the upper layer controller 130. In the present embodiment, the first input variables are P_{ref}, Q_{ref}, V_{DC_ref}, and V_{AC_ref}, which are control target values for the lower-layer modules 150. In other words, P_{ref} is a control target value of active power, Q_{ref} is a control target value of reactive power, V_{DCref} is a control target value of a DC voltage, and V_{ACref} is a control target value of an AC voltage. In addition, the first and second controllers 110 and 120 receive a plurality of second input variables from the lower-layer modules 150. In the present embodiment, the second input variables are i_{ac} and v_{ac}, which are measured voltage and current values of the system measured by the lower-layer modules 150.

Accordingly, the first and second controllers 110 and 120 respectively dq-convert the first and second input variables, and, using the dq-converted values, output control command output values V_{DC}, V_{AC}, i_{AC}, P, and Q through a prescribed program. In other words, V_{DC} is a control command output value of a DC voltage, V_{AC} is a control command output value of an AC voltage, i_{AC} is a control command output value of AC current, P is a control command output value of active power, and Q is a control command output value of reactive power.

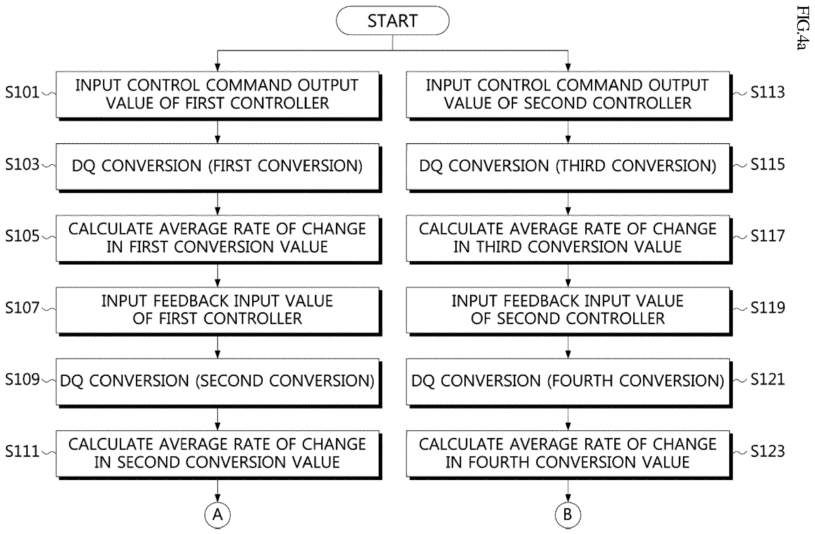

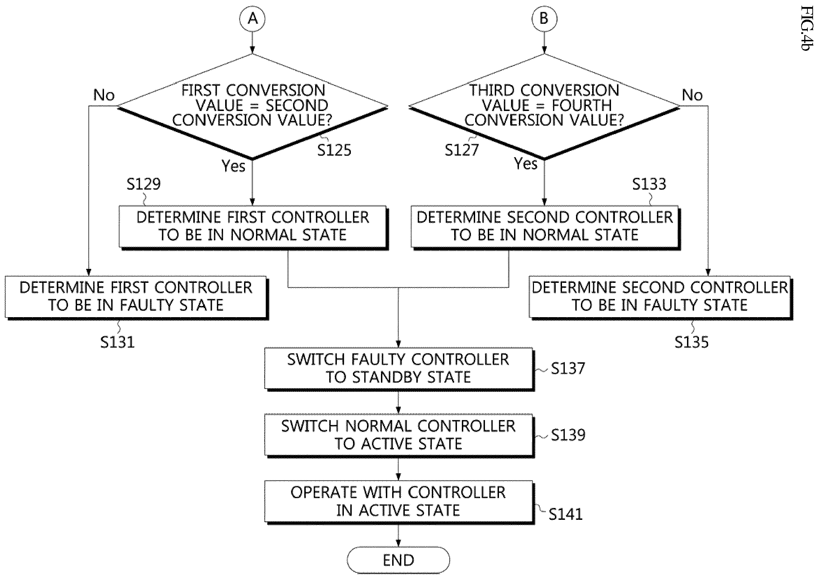

FIG. 4 is a drawing for conceptually explaining an operation method of a dual controller according to an embodiment of the present invention.

Referring to FIG. 4, the first and second controllers 110 and 120, configured in a dual arrangement, respectively and independently sense their own states in a dual controller according to the present invention. To this end, the first controller 110 receives its own control command output values to perform dq-conversion (steps S101 and S103). In the present embodiment, the control command output values include values of V_{DC}, V_{AC}, i_{AC}, P, and Q. Thereafter, as described above, average rates of change in the dq conversion values (i.e. first dq conversion values) for the control command output values of the first controller 110 are calculated (step S105).

In addition, feedback input values fed back to the first controller 110 from the lower-layer modules 150 are received and dq-converted (step S107 and S109). In the present embodiment, as values fed back from the lower-layer modules 150, the feedback input values are measured values of system-side current i_{ac} and voltage V_{ac}. Thereafter, the average rates of change in the dq conversion values (i.e. second dq conversion values) for the feedback input values of the first controller 110 are calculated (step S111).

The above-described procedure is identically applied to the second controller 120. In other words, control command output values of the second controller 120 are received and dq-converted (step S113 and S115), and average rates of change in the dq-conversion values (i.e. third dq conversion values) are calculated (step S117). In addition, feedback input values, fed back from the lower-layer modules 150 to the second controller 120, are received and dq-converted (steps S119 and S121), and average rates of change in dq-conversion values (i.e. fourth dq conversion values) for the feedback input values of the second controller 120 are calculated (step S123).

Then, the first and second dq conversion values are determined to be matched (step S125), and the third and fourth dq conversion values are determined to be matched (step S127). When the first and second dq conversion values are matched, the first controller 110 is determined to be in the normal state (step S129). Otherwise, the first controller 110 is determined to be in the faulty state (step S131). Similarly, when the third and fourth dq conversion values are matched, the second controller 120 is determined to be in the normal state (step S133). Otherwise, the second controller 120 is determined to be in the faulty state (step S135).

Depending on the combination of results determined in that way, the controller in the faulty state is switched over to a standby state (step S137), the controller in the normal state is switched over to the active state (step S139), and operation is enabled only for the controller in the normal state (step S141).

In this way, in the present invention, each of the duplexed first and second controllers 110 and 120 independently uses its own control command output values and feedback input values, fed back from the lower-layer modules 150, to determine whether it is in a faulty state by itself, and switches over to a standby state if it is determined to be in a faulty state, or participates in operation if it is determined to be in the normal state. Accordingly, more accurate and reliable determination criteria are presented for self-diagnosis.

All the constructional elements of the embodiments of the present invention have been described as operating as though they are integrated as one element; however, the present invention is not limited to such embodiments. In other words, within the ranges of the objects of the present invention, at least two elements among the above mentioned constructional elements may be selectively integrated and operated. In addition, terms like 'include', 'comprise', and 'have' should be interpreted by default as inclusive rather than exclusive unless expressly defined to the contrary. Unless otherwise defined, all terms including technical and scientific terms used herein have the same meaning as commonly understood by one of ordinary skill in the art to which this invention belongs. Common terms as found in dictionaries should be interpreted in the context of the related technical writings rather than too ideally or impractically, unless the present disclosure expressly defines them so.

Although exemplary aspects of the present disclosure have been described for illustrative purposes, those skilled in the art will appreciate that various modifications, additions and substitutions are possible, without departing from the essential characteristics of the present invention. Therefore, exemplary aspects of the present invention have not been described for limiting purposes. Accordingly, the scope of the present invention is not to be limited by the above embodiments. It should be understood that the scope of the present invention is to be interpreted based on the following claims and all technical ideas in equivalent scopes belong to the scope of the present invention.

## Claims

1. A method for operating a dual controller, the method comprising:
dq-converting control command output values of first and second controllers;
calculating average rates of change in dq conversion values for the control command output values of the first and second controllers;
dq-converting feedback input values fed back to the first and second controllers;
calculating average rates of change in dq conversion values for the feedback input values of the first and second controllers;
determining the first controller to be in a normal state when the average rates of change in the dq conversion values for the control command output values of the first controller and average rates of change in the dq conversion values for the feedback input values of the first controller are identical, and to be in a faulty state otherwise;
determining the second controller to be in a normal state when the average rates of change in the dq conversion values for the control command output values of the second controller and average rates of change in the dq conversion values for the feedback input values of the second controller are identical, and to be in a faulty state otherwise; and
setting a controller in the faulty state to a standby state and a controller in the normal state to an active state according to results of the determining.

2. The method of claim 1, wherein the control command output values comprise V_{DC}, V_{AC}, i_{AC}, P, which is a value of active power, and Q, which is a value of reactive power.

3. The method of claim 1, wherein the feedback input values comprise current iac and voltage Vac measured on a system side of a lower-layer module.
